# EUROPÄISCHE PATENTSCHRIFT

(11) **EP 3 049 707 B1**
(45) Veröffentlichungstag und Bekanntmachung des Hinweises auf die Patenterteilung: **17.01.2018**
(21) Anmeldenummer: 14790495.7
(22) Anmeldetag: 11.09.2014
(51) Int. Cl.: F16L 27/087, F16H 57/04

(54) **VORRICHTUNG ZUM ÜBERTRAGEN VON FLÜSSIGKEITEN**
DEVICE FOR TRANSFERRING LIQUIDS
DISPOSITIF DE TRANSFERT DE LIQUIDES

(30) Priorität: 25.09.2013 DE 102013219281
(43) Veröffentlichungstag der Anmeldung: 03.08.2016
(73) Patentinhaber: Schaeffler Technologies AG & Co. KG, 91074 Herzogenaurach (DE)
(72) Erfinder: PSCHERER, Heidi, 91086 Aurachtal (DE); SCHAUFLER, Jochen, 91074 Herzogenaurach (DE); DRASER, Georg, 90453 Nürnberg (DE)
(86) Internationale Anmeldenummer: PCT/DE2014/200470
(87) Internationale Veröffentlichungsnummer: WO 2015/043594

(56) Entgegenhaltungen:
- DE-A1-102007 048 124
- DE-A1-102011 076 796

## Beschreibung

### Gebiet der Erfindung

Die Erfindung betrifft eine Vorrichtung zum Übertragen von Flüssigkeiten zwischen zwei konzentrisch ineinander angeordneten Elementen, wobei zwischen den beiden Elementen ein hülsenförmiges hohlzylindrisches erstes Bauteil angeordnet ist, welches mit wenigstens einem Durchgangsloch für die Flüssigkeiten versehen ist, und wobei das erste Bauteil aus Stahl ist und in einem ersten Element der zwei Elemente sitzt, wobei das erste Bauteil mittels wenigstens eines formschlüssig in das erste Element eingreifenden Sicherungselementes des ersten Bauteils gegen Verdrehen um eine Symmetrieachse des ersten Bauteils gesichert ist, und wobei das erste Element zumindest partiell aus einem Werkstoff gebildet ist, der einen größeren Wärmeausdehnungskoeffizienten aufweist als der Werkstoff Stahl.

### Hintergrund der Erfindung

Eine derartige Vorrichtung ist in DE10 2007 048 124 A1 beschrieben. Diese Vorrichtung ist mit zwei konzentrisch ineinander angeordneten Elementen, einem Gehäuseelement und einem Wellenelement, und sowie mit einem zwischen den Elementen angeordneten hülsenförmigen sowie hohlzylindrisch ausgebildeten Zwischenelement versehen. Das Zwischenelement weist ein formschlüssig in das Gehäuseelement eingreifendes Sicherungselement auf, mit dem Zwischenelement das gegen Verdrehen um eine Symmetrieachse des Gehäuseelements gesichert ist. Das Gehäuseelement besteht aus einer Aluminium umfassenden Leichtmetalllegierung.

Eine Drehdurchführung für Öl ist in DE10 2011 076 796 A1 beschrieben. Eine Dichthülsenanordnung ist in DE10 2009 000 925A1 beschrieben. Diese Vorrichtungen werden in Getrieben verwendet. Die Vorrichtung, durch die gewöhnlich Öl als Schmier- und oder Druckmedium geleitet wird, führt das Öl Schmierstellen oder Druckzylindern zum Betätigen von Kolben zu. Häufig ist eine Drehdurchführung, durch welche das Öl von einem rotierenden Element zu einem stehenden Element oder umgekehrt geleitet wird, wesentlicher Bestandteil der Vorrichtung. Rotierende Elemente sind zum Beispiel Getriebewellen und stehende Elemente sind Gehäuse des Getriebes. Die Vorrichtung ist durch eine Hülse und einen Gehäuseabschnitt eines Getriebes gebildet. Der Einsatz von derartigen Hülsen in Gehäusen aus Leichtmetall kann dazu führen, dass sich der Sitz der Hülse sich bei Erwärmung im Fahrbetrieb lockert, weil sich das Gehäuse aufgrund des größeren Wärmeausdehnungskoeffizienten seines Materials mehr ausdehnt als die Hülse aus Stahl. Deshalb sind derartige Hülsen in dem Gehäuse aus Leichtmetall mittels wenigstens eines Sicherungselements gegen Verdrehen gesichert. Die Kanäle der Vorrichtung sind entweder ganz oder teilweise vom Material des Gehäuses bzw. Gehäuseabschnitts begrenzt, welches bei seiner Herstellung dementsprechend aufwändig und kostenintensiv vorbereitet werden muss. Die bisher bekannten Ölführungen des Standes der Technik werden durch Einbeziehung der Gehäuse und Wellen in die Gestaltung der dazu notwendigen Passagen erreicht. Dazu gehören Längs- und Querbohrungen, Längs-, Quer- und Umfangsnuten, die aufwändig spanabhebend eingebracht werden müssen. Darüber hinaus müssen Sitze und Dichtflächen für Ringdichtungen, wie diese auch in DE 10 2011 076 796 A1 beschrieben sind, spanabhebend eingearbeitet werden.

DE 10 2011 076 795 A1 zeigt eine aus zwei Bauteilen zusammengesetzte Hülse, die auf einer Getriebewelle sitzen und mit Getriebewelle relativ zu einem Getriebegehäuse rotierbar sind. Das erste und zweite Bauteil sind über einen Presssitz aneinander gehalten.

### Beschreibung der Erfindung

Die Aufgabe der Erfindung ist es, eine Vorrichtung zu schaffen die sich einfach und kostengünstig herstellen lässt.

Die Erfindung ist nach dem Gegenstand des Anspruchs 1 gelöst.

Erfindungsgemäß ist das zweite Bauteil mittels des Sicherungselementes, mit dem auch das erste Bauteil gesichert ist, gegen Verdrehen um die Symmetrieachse an dem ersten Element und dem ersten Bauteil gehalten. Das Besondere an der Anordnung ist, dass das Sicherungselement einteilig aus dem Material des ersten Bauteils ausgebildet ist. Das erste Bauteil ist vorzugsweise eine Hülse aus Blech, die gezogen und gestanzt ist. Das Sicherungselement ist ein Kragen oder ein radial nach außen ragender Lappen, eine Lasche oder ein anders gestalteter Vorsprung. Der Vorsprung ragt vorzugsweise, entweder in Richtung der Symmetrieachse oder von der Symmetrieachse des hülsenförmigen Bauteils weg, radial durch das zweite Bauteil hindurch. Dazu ist ein Wandabschnitt des zweiten Bauteils mit einem Loch oder am Rand mit einer Aussparung (Ausklinkung) versehen.

Das zweite Bauteil ist ein weiteres hülsenförmiges Bauteil aus Stahl oder ein Bauteil aus einem Material, dessen Wärmeausdehnungskoeffizient größer ist als der Wärmeausdehnungskoeffizient des Werkstoffs Stahl. In diesem Fall ist das Material des zweiten Bauteils beispielsweise eine Aluminium-LeichtmetallLegierung.

Eine Ausgestaltung der Erfindung sieht vor, dass das erste Element ein Gehäuseabschnitt eines Fahrzeuggetriebes ist und das andere Getriebeelement eine durch den Getriebeabschnitt hindurch geführte Welle. Alternativ sind die Elemente Ölbohrungen, Kanale und Druckräume in beliebigen Getriebebaugruppen. Die erfindungsgemäße Vorrichtung kann in allen Arten von Getrieben eingesetzt werden, in denen Öl durch Kanäle gezielt geleitet wird und für die der Aufwand zum Einbringen der Leitungen in die Gehäuse und Bauteile ohne Einsatz dieser Vorrichtung sehr hoch wäre. Derartige Vorrichtungen zur Ölführung und zum Leiten von Öl haben eine große Bedeutung, da mit dem Druck von Öl wesentliche Funktionen des Getriebes aktiviert werden. Beispiele dafür sind die Ansteuerung von Bremsen und Kupplungen. Der Vorteil der Erfindung liegt darin, dass mit einem Sicherungselement drei Bauteile bzw. Elemente der Vorrichtung aneinander gesichert werden können. Der Aufwand zur Herstellung von verschiedenen einzelnen Sicherungen ist damit reduziert.

### Beschreibung der Zeichnungen

Die Erfindung ist nachfolgend anhand von Ausführungsbeispielen näher erläutert.

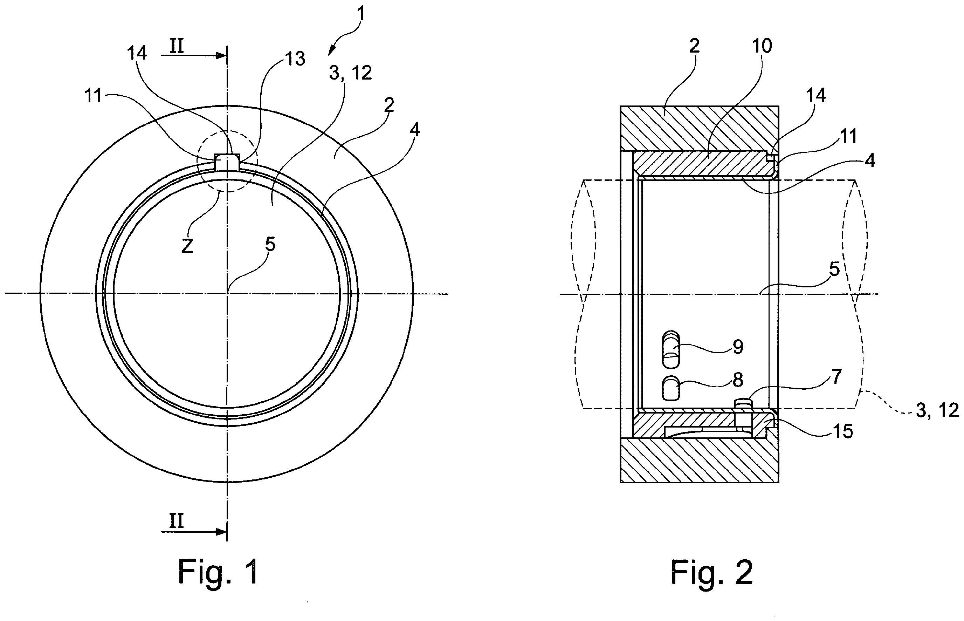

Figur 1 zeigt eine Vorrichtung 1 zum Übertragen von Flüssigkeiten zwischen zwei konzentrisch ineinander angeordneten Elementen 2 und 3 in einer Frontalansicht. Figur 2 zeigt einen Schnitt entlang der Linie II - II, der einem Längsschnitt entlang der Symmetrieachse 5 der Vorrichtung 1 entspricht. Das erste Element 2 ist ein Gehäuseabschnitt und das zweite Element 3 ist die Getriebewelle 12. Die Getriebewelle 12 weist nicht sichtbare Leitungen für die Flüssigkeiten auf, die in Durchgangslöcher 7, 8 und 9 eines hülsenförmig ausgebildeten ersten Bauteils 4 münden. Die Durchgangslöcher 7, 8 und 9 sind in dem hohlzylindrischen ersten Bauteil 4 ausgebildet und können alternativ auch beliebig anders gestaltete Durchbrüche mi größeren oder kleineren Abmessungen sein. Zwischen dem ersten Bauteil 4 und dem ersten Element 2 ist ein weiteres hohlzylindrisches Bauteil 10 konzentrisch zum ersten Bauteil 4 angeordnet. Das erste Bauteil 4 ist aus dem Werkstoff Stahl und das hohlzylindrische zweite Bauteil 10 sowie das erste Element 2 sind beispielsweise aus einer Aluminiumlegierung. Dementsprechend weisen die Werkstoffe des zweiten Bauteils 10 und des ersten Elements 2 einen höheren Wärmeausdehnungskoeffizienten auf, als der Werkstoff des ersten Bauteils 4. Aus dem ersten Bauteil 4 ragt ein aus dem Blech des ersten Bauteils 4 herausgeschnittenes und radial nach außen gebogenes Sicherungselement 11 heraus, das durch eine Ausnehmung 13 am Rand 15 des zweiten Bauteils 10 radial hindurch in eine Ausnehmung 14 des ersten Elements 2 formschlüssig eingreift.

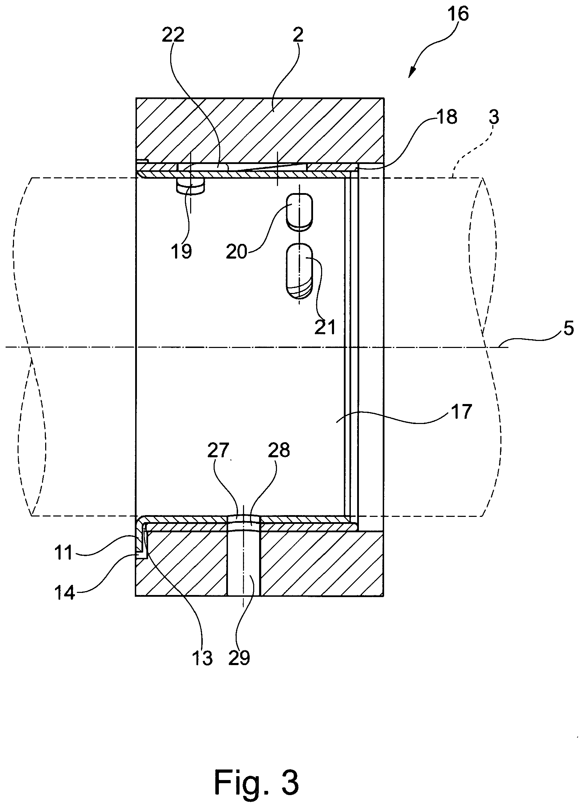

Figur 3 zeigt eine Vorrichtung 16 zum Übertragen von Flüssigkeiten zwischen zwei konzentrisch ineinander angeordneten Elementen in einem Längsschnitt entlang der Symmetrieachse 5. Von den Elementen 2 und 3 ist nur das als Gehäuseabschnitt ausgebildete erste Element 2 bildlich dargestellt. Das als Welle gestaltete zweite Element 3 ist nur gestrichelt angedeutet. Die Vorrichtung 16 ist aus einem hohlzylindrischen ersten Bauteil 17 und aus einem hohlzylindrischen zweiten Bauteil 18 gebildet. Beide Bauteile 17 und 18 sind Hülsen aus Stahl, die aus Blech gezogen sind und die fest ineinander sitzen. Das erste Element 2 besteht aus Leichtmetall und ist damit aus einem Werkstoff, dessen Wärmeausdehnungskoeffizient größer ist als der des Stahls, aus dem die Hülsen sind. Das erste Bauteil 17 weist die Durchgangslöcher 19, 20 und 21 auf, die, wenn die Vorrichtung 16 in ein nicht dargestelltes Getriebe montiert ist, mit Längs- und oder Querkanälen in der Welle korrespondieren. Das zweite Bauteil 18 weist ein Langloch 22 oder eine andere Ausnehmung auf, das in das Durchgangsloch 19 mündet. Das Langloch 22 ist radial nach innen von einem Abschnitt des ersten Bauteils 17, umfangsgerichtet durch den Rand des Langlochs 22 und radial nach außen durch einen Abschnitt des ersten Bauteils 17 begrenzt. Auf diese Weise ist zwischen dem ersten Bauteil 17 und dem Gehäuseabschnitt ein Kanal für Flüssigkeiten ausgebindet. Darüber hinaus ist das erste Bauteil 17 mit einem Durchgangsloch 27 versehen, das umfangsversetzt zu einer Querbohrung 29 ist, Das Durchgangsloch 27 und die Querbohrung 29 sind durch einen Kanal 28, der in dem Bauteil 18 ausgebildet ist, miteinander verbunden.

Aus dem ersten Bauteil 17 ragt nach dem Vorbild der in den Figuren 1 bis 2 dargestellten Vorrichtung ein aus dem Blech des ersten Bauteils 17 herausgeschnittenes und radial nach außen gebogenes Sicherungselement 11 heraus, das durch eine Ausnehmung 13 am Rand 15 des zweiten Bauteils 18 radial hindurch in eine Ausnehmung 14 des ersten Elements 2 formschlüssig eingreift.

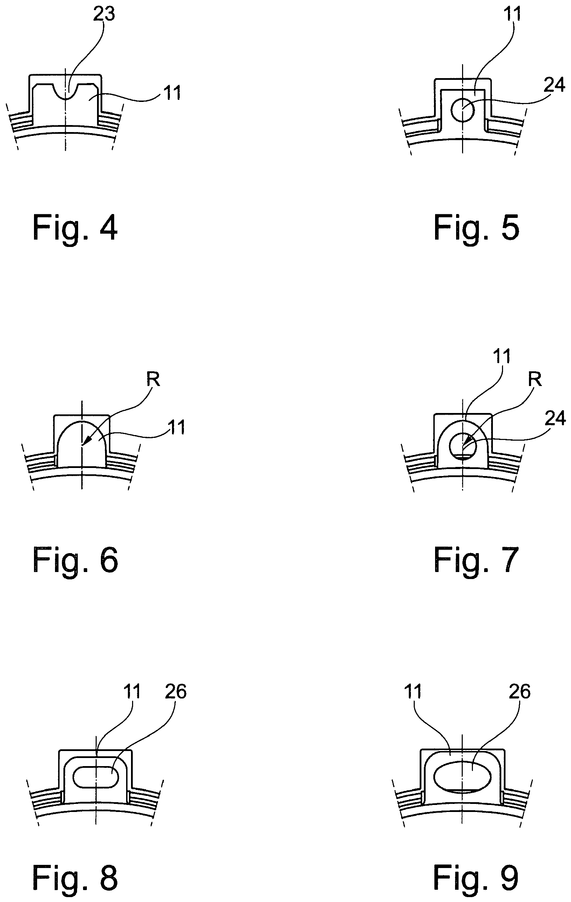

Das Sicherungselement 11 ist ein lappen- bzw. laschenartig ausgebildetes Element, das alternativ die in den Figuren 4, 5, 6, 7, 8 und 9 mit dem Detail Z aus Figur 1 beschriebenen Gestaltungsmerkmale aufweisen kann. Danach kann das Sicherungselement 11 gemäß der Darstellung nach Figur 4 ein endseitig mit einer Vertiefung 23 versehener Lappen sein. Das in Figur 5 dargestellte Sicherungselement 11 ist eine Lasche mit einem Durchgangsloch 24. Das Sicherungselement 11 ist nach der Darstellung von Figur 6 endseitig mit einem Radius R abgerundet. Die Darstellung nach Figur 7 zeigt ein als Lasche mit einem Durchgangsloch 24 ausgebildetes Sicherungselement 11, dessen Ende mit einem Radius R abgerundet ist. Die Figuren 8 und 9 zeigen jeweils ein Sicherungselement 11 mit einem Langloch 26, wobei das Langloch 26 an dem in Figur 9 dargestellten Sicherungselement 11 oval ist.

**Bezugszeichen**

| | | | |
|---|---|---|---|
| 1 | Vorrichtung | 21 | Durchgangsloch |
| 2 | erstes Element | 22 | Langloch |
| 3 | zweites Element | 23 | Vertiefung |
| 4 | erstes Bauteil | 24 | Durchgangsloch |
| 5 | Symmetrieachse | 25 | nicht belegt |
| 6 | | 26 | Langloch |
| 7 | Durchgangsloch | 27 | Durchgangsloch |
| 8 | Durchgangsloch | 28 | Durchgangsloch |
| 9 | Durchgangsloch | 29 | Querbohrung |
| 10 | zweites Bauteil | | |
| 11 | Sicherungselement | | |
| 12 | getriebewelle | | |
| 13 | Ausnehmung | | |
| 14 | Ausnehmung | | |
| 15 | Rand | | |
| 16 | Vorrichtung | | |
| 17 | erstes Bauteil | | |
| 18 | zweites Bauteil | | |
| 19 | Durchgangsloch | | |
| 20 | Durchgangsloch | | |

## Patentansprüche

1. Vorrichtung (1, 16) mit zwei konzentrisch ineinander angeordneten Elementen (2, 3) umfassend ein erstes Element (2) und ein zweites Element (3) sowie mit einem zwischen den Elementen (2, 3) angeordneten hülsenförmigen sowie hohlzylindrisch ausgebildeten ersten Bauteil (4, 17) und mit einem zwischen dem ersten Bauteil (4, 17) und dem ersten Element (2) angeordneten hohlzylindrischen zweiten Bauteil (10, 18), wobei zumindest das erste Bauteil (4, 17) mit wenigstens einem Durchgangsloch (7, 8, 9) zum Übertragen von Flüssigkeiten zwischen den zwei Elementen (2, 3) versehen ist, und wobei das erste Bauteil (4, 17) aus Stahl ist und in dem ersten Element (2) der zwei Elemente (2, 3) sitzt, wobei das erste Bauteil (4, 17) mittels wenigstens eines formschlüssig in das erste Element (2) eingreifenden Sicherungselementes (11) des ersten Bauteils (4, 17) gegen Verdrehen um eine Symmetrieachse (5) des ersten Bauteils (4, 17) gesichert ist, und wobei das erste Element (2) zumindest partiell aus einem Werkstoff gebildet ist, der einen größeren Wärmeausdehnungskoeffizienten aufweist als der Werkstoff Stahl, und wobei ein hohlzylindrisches zweites Bauteil (10, 18) konzentrisch zu dem ersten Bauteil (4, 17) angeordnet ist und dabei das zweite Bauteil (10, 18) gegen Verdrehen um die Symmetrieachse (5) an dem ersten Element (2) und dem ersten Bauteil (4, 17) gehalten ist, **dadurch gekennzeichnet, dass** das zweite Bauteil (10, 18) mittels des Sicherungselementes (11) gegen Verdrehen um die Symmetrieachse (5) an dem ersten Element (2) und dem ersten Bauteil (4, 17) gehalten ist und dass das Sicherungselement (11) wenigstens ein radial aus dem Material des ersten Bauteils (4, 17) hervorragender Lappen ist, wobei der Lappen einen Wandabschnitt des zweiten Bauteils (10, 18) radial durchgreift.

2. Vorrichtung nach Anspruch 1, **dadurch gekennzeichnet, dass** das Sicherungselement (11) eine Ausnehmung (13) aus einer Wand an einem axialen Rand (15) des ersten Bauteils (4, 17) radial durchgreift.

3. Vorrichtung nach Anspruch 1, **dadurch gekennzeichnet, dass** das zweite Bauteil (10, 18) aus einem Werkstoff gebildet ist, der einen größeren Wärmeausdehnungskoeffizienten aufweist als der Werkstoff Stahl.

## Claims

1. Device (1, 16) having two elements (2, 3) arranged concentrically one inside the other, comprising a first element (2) and a second element (3), and having a sleeve-shaped and hollow-cylindrical first component (4, 17) arranged between the elements (2, 3) and having a hollow-cylindrical second component (10, 18) arranged between the first component (4, 17) and the first element (2), wherein at least the first component (4, 17) is provided with at least one through-hole (7, 8, 9) for transferring liquids between the two elements (2, 3), and wherein the first component (4, 17) is made of steel and is seated in the first element (2) of the two elements (2, 3), wherein the first component (4, 17) is secured against rotation about an axis of symmetry (5) of the first component (4, 17) by means of at least one securing element (11) of the first component (4, 17) that engages in the first element (2) in a form-fitting manner, and wherein the first element (2) is at least partially formed from a material which has a greater coefficient of thermal expansion than the material steel, and wherein a hollow-cylindrical second component (10, 18) is arranged concentrically to the first component (4, 17) and thereby the second component (10, 18) is held on the first element (2) and the first component (4, 17) against rotation about the axis of symmetry (5), **characterized in that** the second component (10, 18) is held on the first element (2) and the first component (4, 17) against rotation about the axis of symmetry (5) by means of the securing element (11), and **in that** the securing element (11) is at least one tab which projects radially from the material of the first component (4, 17), wherein the tab engages radially through a wall portion of the second component (10, 18).

2. Device according to Claim 1, **characterized in that** the securing element (11) engages radially through a cutout (13) of a wall on an axial edge (15) of the first component (4, 17).

3. Device according to Claim 1, **characterized in that** the second component (10, 18) is formed from a material which has a greater coefficient of thermal expansion than the material steel.

## Revendications

1. Dispositif (1, 16) comprenant deux éléments (2, 3) disposés concentriquement l'un dans l'autre, comprenant un premier élément (2) et un deuxième élément (3) ainsi qu'un premier composant (4, 17) en forme de douille et réalisé sous forme cylindrique creuse, disposé entre les éléments (2, 3), et qu'un deuxième composant cylindrique creux (10, 18) disposé entre le premier composant (4, 17) et le premier élément (2), au moins le premier composant (4, 17) étant pourvu d'au moins un trou traversant (7, 8, 9) pour le transfert de liquides entre les deux éléments (2, 3), et le premier composant (4, 17) étant en acier et reposant dans le premier élément (2) parmi les deux éléments (2, 3), le premier composant (4, 17) étant fixé au moyen d'au moins un élément de fixation (11) du premier composant (4, 17) s'engageant par correspondance de formes dans le premier élément (2) de manière à empêcher une rotation autour d'un axe de symétrie (5) du premier composant (4, 17), et le premier élément (2) étant formé au moins en partie d'un matériau qui présente un coefficient de dilatation thermique supérieur à celui du matériau acier, et un deuxième composant cylindrique creux (10, 18) étant disposé concentriquement au premier composant (4, 17) et en l'occurrence le deuxième composant (10, 18) étant retenu sur le premier élément (2) et le premier composant (4, 17) de manière à empêcher sa rotation autour de l'axe de symétrie (5), **caractérisé en ce que** le deuxième composant (10, 18) est retenu sur le premier élément (2) et le premier composant (4, 17) par le biais de l'élément de fixation (11) de manière à empêcher sa rotation autour de l'axe de symétrie (5) et **en ce que** l'élément de fixation (11) est au moins une languette faisant saillie radialement hors du matériau du premier composant (4, 17), la languette venant en prise radialement à travers une portion de paroi du deuxième composant (10, 18).

2. Dispositif selon la revendication 1, **caractérisé en ce que** l'élément de fixation (11) vient en prise radialement à travers un évidement (13) hors d'une paroi au niveau d'un bord axial (15) du premier composant (4, 17).

3. Dispositif selon la revendication 1, **caractérisé en ce que** le deuxième composant (10, 18) est formé d'un matériau qui présente un coefficient de dilatation thermique supérieur à celui du matériau acier.
